# EUROPÄISCHE PATENTSCHRIFT

(11) **EP 0 468 240 B1**
(45) Veröffentlichungstag und Bekanntmachung des Hinweises auf die Patenterteilung: **31.08.1994**
(21) Anmeldenummer: 91111075.7
(22) Anmeldetag: 04.07.1991
(51) Int. Cl.: A45D 20/30

(54) **Netzbetriebenes Warmluftgerät**
Electric dryer
Séchoir électrique

(30) Priorität: 21.07.1990 DE 4023250
(43) Veröffentlichungstag der Anmeldung: 29.01.1992
(73) Patentinhaber: Braun Aktiengesellschaft, Frankfurt am Main (DE)
(72) Erfinder: Meyer, Werner, W-6231 Schwalbach (DE)

(56) Entgegenhaltungen:
- AT-B- 329 164
- DE-A- 2 816 421
- DE-A- 3 133 325
- DE-A- 3 139 199
- DE-A- 3 234 012

## Beschreibung

Die Erfindung geht aus von einem netzbetriebenen Warmluftgerät, insbesondere einem Haartrockner, mit einer elektrischen Heizung und einem Gebläsemotor, wobei die Heizung wenigstens zwei parallel geschaltete Widerstände aufweist und die Heizleistung mittels elektrischer Schaltmittel gemäß einem einstellbaren Sollwert durch eine Impulspaketsteuerung änderbar ist. Diese Warmluftgeräte sind allgemein bekannt und insbesondere in der DE-A1 31 39 199 beschrieben, deren Offenbarungsgehalt durch ausdrücklichen Verweis in den Rahmen der vorliegenden Anmeldung aufgenommen wird.

Mittels des in Reihe zu einem Heizwiderstand geschalteten elektrischen Schalters ist eine recht feinfühlige Steuerung bzw. Regelung der Temperatur der abgegebenen Warmluft in Abhängigkeit von dem jeweils eingestellten Sollwert möglich. Diese Einstellung kann wahlweise stufenlos oder in Stufen erfolgen. Derartige Steuer- und Regelschaltungen sind an sich bekannt und in dafür gebräuchlichen, integrierten Schaltkreisen realisiert. Ein für diesen Verwendungszweck geeigneter, integrierter Schaltkreis besteht aus einem Nullspannungsschalter, der zur Thyristor- oder Triac-Ansteuerung im Nulldurchgang dient. Der elektrische Schalter wird mit Hilfe des Nullspannungsschalters in an sich bekannter Weise durch eine Impulspaketsteuerung gesteuert. Die im Heizwiderstand erzeugte Heizleistung wird dabei durch ein impulsartiges Ansteuern des elektrischen Schalters, insbesondere des Triacs, im Spannungs- bzw. Strom-Nulldurchgang durchgeführt. Das Verhältnis der Impulslängen zu den Impulspausen variiert mit der Steuerspannung des Nullspannungsschalters. Insgesamt bedeutet dies, daß die Heizung intervallmäßig ein- und ausgeschaltet wird. Ist dieses Intervall hinreichend klein gegenüber der thermischen Zeitkonstanten der Heizung, so ist die mittelere Temperatur der Heizung nahezu konstant und Schwankungen werden vom Benutzer des Warmluftgerätes nicht bemerkt. Diesem Konzept sind jedoch Grenzen gesetzt, wenn sehr hohe Leistungen in der Größenordnung zwischen 1500 W und 2000 W oder höher zu schalten sind. Zum einen treten dann Probleme mit dem Steuer- bzw. Regelverhalten der Temperatursteuerung bzw. -regelung auf, da die Einschwingzeit bzw. das Überschwingen der Temperatur umso größer ist, je höher die geschalteten Leistungen sind. Zum anderen werden an die zulässigen Spannungsrückwirkungen auf das Stromnetz gewisse Anforderungen gestellt, die bei diesen zu schaltenden Leistungen zu nicht praktikablen, geringen Schaltraten bzw. zu sehr langen Schaltzeiten führen. Sollen beispielsweise 2000 W geschaltet werden, darf der Verbraucher nur etwa alle 17 sec. ein- und ausgeschaltet werden. Diese Zeiten sind in der Praxis nicht realisierbar, da sie die Zeitkonstante der Heizung eines Warmluftgerätes um ein Mehrfaches überschreiten und zu sehr starken Temperaturschwankungen der Ausblastemperatur des Warmluftgerätes führen würden.

Es ist daher Aufgabe der Erfindung, die geschilderten Nachteile der bekannten Warmluftgeräte zu vermeiden. Diese Aufgabe wird dadurch gelöst, daß den wenigstens zwei Widerständen jeweils ein steuerbares Halbleiterelement, insbesondere eine Triac, zugeordnet ist, wobei mittels der Halbleiterelemente nur ein Widerstand allein oder die wenigstens zwei Widerstände zusammen mit Netzspannung beaufschlagbar sind und Mittel vorgesehen sind, die ein gleichzeitiges Schalten der wenigstens zwei Halbleiterelemente verhindern. Dadurch, daß die Heizung in wenigstens zwei, jeweils unabhängig steuerbare bzw. regelbare Heizstränge unterteilt wird, verbessert sich zum einen das Steuer- bzw. Regelverhalten erheblich; zum anderen werden dann erheblich größere Schaltraten bzw. kürzere Schaltzeiten zugelassen, bei denen die Schaltintervalle nur noch einen Bruchteil der thermischen Zeitkonstanten der Heizung ausmachen. Temperaturschwankungen der Heizung sind dann nur noch gering und für den Benutzer nicht mehr wahrnehmbar. Dadurch, daß die Steuersignale der Halbleiterelemente aus dem Sollwert und einem für jedes Halbleiterelement unterschiedlichen Referenzwert erzeugt werden, ist gewährleistet, daß ein gleichzeitiges Schalten der wenigstens zwei Halbleiterelemente vermieden wird. Eine besonders einfache Erzeugung der Referenzwerte wird dadurch erreicht, daß die Referenzwerte jeweils einen unterschiedlich, zeitlich konstanten Anteil und einen zeitlich veränderlichen Anteil aufweisen, dessen Periodizität jedoch für jeden Referenzwert gleich ist. Eine besonders vorteilhafte Ausgestaltung wird dadurch angegeben, daß ein Widerstand durch Vorschalten einer Gleichrichterdiode im Halbwellenbetrieb mit einer bestimmten Dauerleistung betrieben wird, und die andere Halbwelle mittels des Halbleiterelementes bei Bedarf zugeschaltet wird. Diese Maßnahme gewährleistet, daß unabhängig von der jeweils geforderten Heizleistung eine gewisse Grundleistung vorhanden ist, die zur Versorgung des Gebläsemotors herangezogen wird. Hierdurch ist es möglich, den Gebläsemotor dem Heizwiderstand oder einem Teilbereich von diesem parallel zu schalten. Weitere Vorteile der Erfindung ergeben sich aus den Unteransprüchen und der nachfolgenden Beschreibung eines Ausführungsbeispiels. Es zeigen:
- Figur 1: ein Blockschaltbild eines temperaturgeregelten Haartrockners und
- Figur 2: ein Spannungs-Zeitdiagramm der Referenzspannungen.

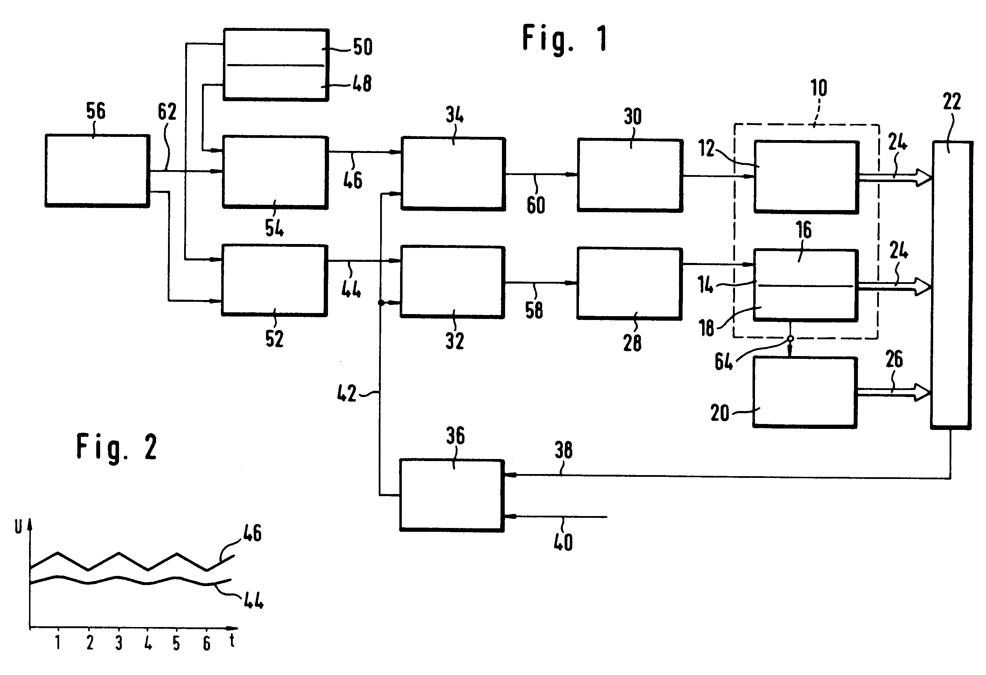

In der schematischen Darstellung der Fig. 1 ist eine Heizung eines Haartrockners mit der Bezugsziffer 10 bezeichnet. Der detaillierte konstruktive Aufbau solcher Drahtheizelemente für Haartrockner ist hinreichend bekannt und beispielsweise in der EP-A1 0 038 414 beschrieben. Gleiches gilt für den detaillierten Aufbau eines Haartrocknergerätes an sich. Für die speziellen Ausgestaltungen eines solchermaßen aufgebauten Haartrockners wird auf die DE-A1 36 39 915 verwiesen.

Die Heizung 10 besteht aus zwei parallel geschalteten Widerständen 12, 14 mit einer Leistung von jeweils beispielsweise 1000 W. Der Widerstand 14 ist schematisch in einen Stellbereich 16 und einen Festbereich 18 aufgeteilt. Dies wird beispielsweise dadurch realisiert, daß zum Widerstand 14 eine Diode in Serie geschaltet ist. Somit wird der Widerstand 14 bei eingeschaltetem Gerät mit einer minimalen Dauerleistung (Festbereich 18) von beispielsweise 500 W betrieben. Über einen Spannungsabgriff 64 ist an den Widerstand 14 ein Gebläsemotor 20 angeschlossen. Ein über den Festbereich 18 hinausgehender Leistungbedarf wird über ein Halbleiterelement 28 für den Widerstand 14 und ein weiteres Halbleiterelement 30 für den Widerstand 12 gesteuert oder geregelt. Die Halbleiterelemente 28 und 30 beinhalten im wesentlichen einen Nullspannungsschalter sowie einen Triac. In Abhängigkeit von den Signalen der Steuerleitungen 58 und 60 für die Halbleiterelemente 28 und 30 werden je nach Leistungsbedarf volle Perioden der an den Triacs anliegenden Netzwechselspannung auf die Widerstände 12, 14 geschaltet. Da der Widerstand 14 zur Motorversorgung mit einer bestimmten Grundleistung im Halbwellenbetrieb betrieben wird, dient das Halbleiterelement 28 lediglich dazu, bei Bedarf die von der vorgeschalteten Diode gesperrte Halbwelle hinzuzuschalten. Das Halbleiterelement 30 schaltet je nach Bedarf die Vollwelle auf den Widerstand 12. Erzeugt werden die Steuersignale für die Halbleiterelemente 28 und 30 von jeweils einem Komparator 32 und 34. Eingangsseitig werden die Komparatoren 32 und 34 zum einen mit einem vorgegebenen Sollwert (Steuerung) bzw. einem Stellwert 42 (Regelung) beaufschlagt. Zum anderen wird jedem Komparator 32, 34 jeweils ein Referenzwert 44, 46 als Ausgangsgröße jeweils einer Referensstufe 52, 54 zugeführt. In den Referenzstufen 52, 54 werden die Signale eines Dreieckspannungsgenerators 56 sowie jeweils einer Gleichspannungsquelle 48, 50 additiv überlagert. Im vorliegenden Fall einer temperaturgeregelten Heizung 10 wird die Lufttemperatur mittels eines Temperaturfühlers 22 erfaßt. Die Kopplung zwischen dem Temperaturfühler 22, der Heizung 10 und dem Gebläsedurchsatz ist durch Pfeile 24, 26 angedeutet. Das Ausgangssignal des Temperaturfühlers 22 wird einer Vergleichsstufe 36 als Istwert 38 zugeführt. Weitere Eingangsgröße der Vergleichsstufe 36 ist ein Sollwert 40 für die gewünschte Temperatur, der vom Benutzer mittels eines Betätigungsgliedes am Handgriff des Haartrockners einstellbar ist. Dadurch, daß die Heizung mit einer Leistung von beispielsweise 2000 W in zwei Heizstränge mit jeweils 1000 W Leistung unterteilt wird, läßt sich die Heizung ohne wahrnehmbare Temperaturschwankungen für den Benutzer schalten. Das Halbleiterelement 28 schaltet die zweite Halbwelle des Stellbereichs 16 vom Widerstand 14. Die Leistung des weiteren Widerstandes 12 von beispielsweise ebenfalls 1000 W wird über das Halbleiterelement 30 geschaltet. Es ergibt sich somit ein Leistungsstellbereich von beispielsweise 500 W - 2000 W. Die Grundleistung von 500 W zur Motorversorgung ist zwar höher als bei einer Reihenschaltung von Motor und Heizung, dennoch ist die resultierende minimale Ausblastemperatur immer noch gering und als Kaltstufe für den Benutzer akzeptabel. Allerdings muß sichergestellt sein, daß nicht beide Halbleiterelemente 28, 30 gleichzeitig schalten. Hierzu werden die Temperaturen 32, 34 mit unterschiedlichen Referenzwerten 44, 46, deren Verlauf in Fig. 2 dargestellt ist, beaufschlagt. Die Referenzwerte 44, 46 setzen sich aus einer Dreieckspannung 62 und unterschiedlichen Gleichspannungen der Gleichspannungsquellen 48 und 50 zusammen. Der Dreieckspannungsanteil der Referenzwerte 44 und 46 weist eine Amplitude auf, die der zu schaltenden Leistung proportional ist. Im vorliegenden Ausführungsbeispiel bedeutet dies, daß die Amplitude des Dreieckspannungsanteils beim Referenzwert 44 etwa halb so groß ist wie die des Referenzwertes 46. Durch die additive Überlagerung unterschiedlicher Gleichspannungsanteile wird dafür gesorgt, daß die Referenzwerte 44 und 46 zu keinem Zeitpunkt identisch sind. Dies führt dazu, daß, ausgehend von der Grundleistung von beispielsweise 500 W im Halbwellenbetrieb des Widerstandes 14, bei erhöhtem Leistungsbedarf zunächst die zweite Halbwelle auf den Widerstand 14 durch das Halbleiterelement 28 geschaltet wird. Bei weiter steigendem Leistungsbedarf, der die Gesamtleistung des Widerstandes 14 übertrifft, wird durch das Halbleiterelement 30 auch der Widerstand 12 alt der Netzwechselspannung beaufschlagt. Hierdurch ist gewährleistet, daß die Halbleiterelemente 28, 30 unabhängig vom Betriebszustand des Gerätes nicht gleichzeitig schalten, so daß die Spannungsrückwirkung auf das Netz trotz kurzer Schaltzeitintervalle gering ist und das Einschwing- bzw. Überschwingverhalten der Temperaturregelung innerhalb akzeptabler Toleranzen liegt. Darüber hinaus lassen sich Sonderfunktionen, wie beispielsweise kurzzeitige Kaltstufe bzw. kurzzeitige maximale Leistungsanforderung, kostengünstig realisieren, da die hierzu erforderlichen Schaltelemente direkt in den Regelkreis eingreifen und preiswerte Schalter mit niedriger Schaltleistung zum Einsatz kommen können.

## Patentansprüche

1. Netzbetriebens Warmluftgerät, insbesondere Haartrockner, mit einer elektrischen Heizung (10) und einem Gebläsemotor (20), wobei die Heizung (10) wenigstens zwei parallel geschaltete Widerstände (12, 14) aufweist und die Heizleistung mittels elektrischer Schaltmittel gemäß einem einstellbaren Sollwert (40) durch eine Impulspaketsteuerung änderbar ist, dadurch gekennzeichnet, daß den wenigstens zwei Widerständen (12, 14,) jeweils ein steuerbares Halbleiterelement (28, 30), insbesondere eine Triac, zugeordnet ist, wobei mittels der Halbleiterelemente (28, 30) nur ein Widerstand (14) allein oder die wenigstens zwei Widerstände (12, 14) zusammen mit Netzspannung beaufschlagbar sind und Mittel (48, 50, 52, 54, 56) vorgesehen sind, die ein gleichzeitiges Schalten der Halbleiterelemente (28, 30) verhindern.

2. Warmluftgerät nach Anspruch 1, dadurch gekennzeichnet, daß die Steuersignale für die Halbleiterelemente (28, 30) aus dem Sollwert (40) und einem für jedes Halbleiterelement (28, 30) unterschiedlichen Referenzwert (44, 46) erzeugt werden.

3. Warmluftgerät nach Anspruch 2, dadurch gekennzeichnet, daß die Referenzwerte (44, 46) eine von Referenzwert zu Referenzwert unterschiedliche, jedoch zeitlich konstante Komponente (48, 50) und eine zeitlich veränderliche Komponente (62) mit für jeden Referenzwert gleicher Periodizität aufweisen.

4. Warmluftgerät nach Anspruch 1, dadurch gekennzeichnet, daß ein Widerstand (14) im Halbwellenbetrieb eine bestimmte Dauerleistung abgibt und die andere Halbwelle mittels des Halbleiterelements (28) bei Bedarf zugeschaltet wird.

5. Warmluftgerät nach Anspruch 4, dadurch gekennzeichnet, daß der Gebläsemotor (20) zum Widerstand (14) oder einem Teilwiderstand von diesem parallel geschaltet ist.

6. Warmluftgerät nach Anspruch 1, dadurch gekennzeichnet, daß ein Temperaturfühler (22) die Gebläselufttemperatur erfaßt und einen Istwert (38) liefert, der als Eingangsgröße eines Temperaturregelkreises einer Vergleichsstufe (36) zugeführt wird.

7. Warmluftgerät nach Anspruch 1, dadurch gekennzeichnet, daß zu jedem Widerstand (12, 14) ein Triac in Serie geschaltet ist und der Steuereingang eines jeden Triacs an einen Komparator (32, 34) angeschlossen ist, wobei jeder Komparator (32, 34) eingangsseitig von der Ausgangsgröße einer Vergleichsstufe (36) und der Ausgangsgröße jeweils einer Referenzstufe (52, 54) beaufschlagt wird.

8. Warmluftgerät nach Anspruch 7, dadurch gekennzeichnet, daß jede Referenzstufe (52, 54) eingangsseitig an den Ausgang eines Dreieckspannungsgenerators (56) und den Ausgang jeweils einer Gleichspannungsquelle (48, 50) angeschlossen ist.

9. Warmluftgerät nach Anspruch 2 oder 8, dadurch gekennzeichnet, daß die Referenzwerte (44, 46) sich aus jeweils unterschiedlichen Gleichspannungsanteilen und einen Dreieckspannungsanteil zusammensetzen, wobei die Amplitude der Dreiecksspannung proportional zur vom zugehörigen Halbleiterelement (28, 30) zu schaltenden Leistung ist und die Gleichspannungsanteile so festgelegt sind, daß die Referenzwerte (44, 46) zu keinem Zeitpunkt identisch sind.

## Claims

1. An A.C. supply operated hot-air appliance, in particular a hair dryer, with an electric heating means (10) and a fan motor (20), wherein the heating means (10) includes at least two parallel-connected resistors (12, 14) and the heating power can be varied by electric switching means in accordance with an adjustable desired value (40) by means of a multi-cycle control, characterized in that the at least two resistors (12, 14) are each assigned a controlled-conductivity semiconductor device (28, 30), in particular a triac, with the semiconductor devices (28, 30) being adapted to apply line voltage to only one resistor (14) alone or to the at least two resistors (12, 14) jointly, and that means (48, 50, 52, 54, 56) are provided preventing the semiconductor devices (28, 30) from conducting simultaneously.

2. The hot-air appliance as claimed in claim 1, characterized in that the control signals for the semiconductor devices (28, 30) are obtained from the desired value (40) and from a reference value (44, 46) differing for each semiconductor device (28, 30).

3. The hot-air appliance as claimed in claim 2, characterized in that the reference values (44, 46) include each a different component (48, 50) invariable with time and a component (62) variable with time whose periodicity is equal for each reference value.

4. The hot-air appliance as claimed in claim 1, characterized in that a resistor (14) operating in the half-wave mode delivers a preselected continuous power, and that the other half-wave is applied, as required, by means of the semiconductor device (28).

5. The hot-air appliance as claimed in claim 4, characterized in that the fan motor (20) is connected in parallel with the resistor (14) or a section thereof.

6. The hot-air appliance as claimed in claim 1, characterized in that a temperature sensor (22) senses the fan air temperature and supplies an actual value (38) delivered to a comparator stage (36) as input variable of a temperature control circuit.

7. The hot-air appliance as claimed in claim 1, characterized in that each resistor (12, 14) is connected in series with a triac, and that the control input of each triac is connected to a respective comparator (32, 34), each comparator (32, 34) having applied to its input the output variable of a comparator stage (36) and the output variable of a respective reference stage (52, 54).

8. The hot-air appliance as claimed in claim 7, characterized in that each reference stage (52, 54) has its input connected to the output of a delta voltage generator (56) and to the output of a D.C. voltage source (48 and 50, respectively).

9. The hot-air appliance as claimed in claim 2 or claim 8, characterized in that the reference values (44, 46) are composed of different D.C. voltage components and of a delta voltage component, wherein the amplitude of the delta voltage is proportional to the power to be supplied through the associated semiconductor device (28, 30), and the D.C. voltage components are so determined that the reference values (44, 46) are not identical at any time.

## Revendications

1. Instrument à air chaud alimenté par le réseau, en particulier séchoir à cheveux, comprenant un chauffage électrique (10) et un moteur de ventilateur (20), le chauffage (10) présentant au moins deux résistances (12, 14) montées en parallèle, la puissance calorifique pouvant, à l'aide de moyens de commutation électrique, être modifiée conformément à une valeur prescrite ajustable (40) par une commande par paquet d'impulsions, caractérisé en ce qu'un élément semi-conducteur (28, 30) commandable, en particulier un triac, est adjoint à chacune des au moins deux résistances (12, 14), une seule résistance (14) ou les au moins deux résistances (12, 14) ensemble pouvant être alimentées par une tension de réseau au moyen des éléments semi-conducteurs (28, 30), et en ce que des moyens (48, 50, 52, 54, 56) qui empêchent une commutation simultanée des éléments semi-conducteurs (28, 30), sont prévus.

2. Instrument à air chaud suivant la revendication 1, caractérisé en ce que les signaux de commande pour les éléments semi-conducteurs (28, 30) sont produits à partir de la valeur prescrite (40) et d'une valeur de référence (44, 46) différente pour chaque élément semi-conducteur (28, 30).

3. Instrument à air chaud suivant la revendication 2, caractérisé en ce que les valeurs de référence (44, 46) présentent une composante (48, 50) différente de valeur de référence en valeur de référence, mais constante dans le temps, et une composante (62) modifiable dans le temps avec une périodicité identique pour chaque valeur de référence.

4. Instrument à air chaud suivant la revendication 1, caractérisé en ce qu'une résistance (14) fournit, dans une mise en service à demi-ondes, une puissance continue déterminée et en ce que l'autre demi-onde est, en cas de besoin, mise en circuit au moyen de l'élément semi-conducteur (28).

5. Instrument à air chaud suivant la revendication 4, caractérisé en ce que le moteur de ventilateur (20) est monté en parallèle à la résistance (14) ou à une résistance partielle de celle-ci.

6. Instrument à air chaud suivant la revendication 1, caractérisé en ce qu'un détecteur de température (22) saisit la température de l'air du ventilateur et fournit une valeur réelle (38) qui est amenée, comme grandeur d'entrée d'un circuit de réglage de température, à un poste de comparaison (36).

7. Instrument à air chaud suivant la revendication 1, caractérisé en ce qu'un triac est monté en série à chaque résistance (12, 14) et en ce que l'entrée de commande de chacun des triacs est raccordée à un comparateur (32, 34), chaque comparateur (32, 34) étant du côté entrée, alimenté par la grandeur de sortie d'un poste de comparaison (36) et par la grandeur de sortie de chaque fois un poste de référence (52, 54).

8. Instrument à air chaud suivant la revendication 7, caractérisé en ce que chaque poste de référence (52, 54) est, du côté entrée, raccordé à la sortie d'un générateur de tension en triangle (56) et à la sortie de chaque fois une source de tension continue (48, 50).

9. Instrument à air chaud suivant l'une des revendications 2 et 8, caractérisé en ce que les valeurs de référence (44, 46) se composent chacune de fractions différentes de tension continue et d'une fraction de tension en triangle, l'amplitude de la tension en triangle étant proportionnelle à la puissance à commuter par l'élément semi-conducteur correspondant (28, 30), les fractions de tension continue étant fixées de façon que les valeurs de référence (44, 46) ne soient identiques à aucun moment.
